# EUROPEAN PATENT APPLICATION

(11) **EP 4 588 733 A1**
(43) Date of publication of application: **23.07.2025**
(21) Application number: 24152564.1
(22) Date of filing: 18.01.2024
(51) Int. Cl.: B60T 8/1755, B60T 8/1764

(54) **COMPUTER-IMPLEMENTED METHOD AND CONTROL SYSTEM FOR CONTROLLING A YAW MOTION OF A VEHICLE**

(71) Applicant: KNORR-BREMSE Systeme für Nutzfahrzeuge GmbH, 80809 München (DE)
(72) Inventor: Szucs, Balázs, H-6000 Kecskemet (HU); Déri, Péter, H-6000 Kecskemet (HU)

(57) **Abstract**

The disclosure relates to a computer-implemented method and control system (10) for controlling a yaw motion of a vehicle (1) having at least one front and rear axle (2, 3) during braking, comprising, in a first control loop (100), providing a steering control signal (110) to the vehicle by a first controller (101) for controlling a steering behavior of the vehicle according to a driver's command, providing at least one first closed-loop feedback signal (120) indicative of a vehicle motion state to the first controller (101), in a second control loop (200), estimating at least one slip angle (α, β) of the vehicle in an estimation module (201) of a second controller (210) after initiating a braking of the vehicle and generating, in a control module (202) of the second controller (210), an output signal (215) of the second controller (210) based on the estimated slip angle (α, β), controlling at least one braking actuator (41, 42) of the vehicle in accordance with the output signal (215) of the second controller (210), and providing at least one second closed-loop feedback signal (220) indicative of a vehicle motion state to the estimation module (201) of the second controller (210) as an input signal for estimating the at least one slip angle (α, β).

## Description

The present disclosure relates to a computer-implemented method and control system for controlling a yaw motion of a vehicle having at least one front and rear axle during braking. The present disclosure further relates to a vehicle control system comprising such control system, and to a vehicle comprising such vehicle control system.

Vehicles having at least one front and rear axle, such as an automobile, truck or bus, are often provided with modern electronic brake systems (such as Antilock Braking System, ABS, or Electronic Braking System, EBS) which have a yaw-moment control on the front axle and/or rear axle to allow the driver to maintain controllability of the vehicle in so-called split friction or split-mu braking situations. Split friction (or split-µ (mu)) is a road condition that occurs when the friction significantly differs between the left and the right wheelpath. The road may not be perceived as hazardous when accelerating, cruising or even braking softly, but in a case of harder (emergency-) braking, the vehicle will start to rotate over the wheelpath offering highest grip.

Vehicles are typically provided with one or more brake systems which apply compressed air to braking actuators, such as brake operating cylinders, acting on a respective brake disk connected to a respective wheel for slowing down the rotating movement of the wheel. In such brake systems, the braking force acting on the vehicle or wheel is dependent on the brake pressure resulting from the compressed air acting on the actuator. The permissible brake pressure difference between left and right side of the vehicle, e.g. in split-mu braking situations, is usually a compromise between controllability and stopping distance. An empty vehicle with short wheelbase is more critical to control than a fully loaded or a long wheelbase one. The yaw-dynamics are much faster in this case and, therefore, the driver shall have better reflexes, or the force difference that causes the yaw-moment shall be maintained much more carefully. Since this situation is safety critical and state-of-the-art control methods are typically open loop, this means that the driver capabilities and the differences in vehicle dynamic behavior due to different loads and layouts cannot be fully utilized.

Some implementations are modifying the pressure difference on the front and partially on the rear axles based on predetermined application parameters that are considering vehicle properties and, in some cases, use values from different parameter maps. The braking system must be parametrized to ensure the stability for a worst-case scenario, which means a disadvantage for more skilled drivers or the non-critical vehicle configurations regarding braking distance.

A common basic control strategy on a split adhesion surface is the so-called select low control, which means that the possible maximum brake force of the low adhesion side (that is, the maximum brake force at which the wheels do not stop rotating resulting from slipping on the surface due to low friction) is limiting the possible maximum brake force of the high adhesion side as well. This approach minimizes the yaw-motion of the vehicle, however results in the longest brake distance. This may be improved by current known open loop control methods, where predefined limits are applied on the brake force difference between left and right side of the vehicle, thus decreasing the stopping distance while maintaining stability. But such methods still neglect the driver capabilities and the vehicle dynamic behavior.

It would therefore be beneficial to provide a control method for controlling a motion of a vehicle during braking and a control system for a vehicle which are capable to reduce braking distance in split-mu braking situations while maintaining stability and taking account of respective driver capabilities and vehicle dynamic behavior.

The present disclosure relates to a computer-implemented method and control system for controlling a yaw motion of a vehicle during braking according to the appended claims. Embodiments are disclosed in the dependent claims. The present disclosure further relates to a vehicle control system comprising such control system, and to a vehicle comprising such vehicle control system.

According to an aspect, there is provided a computer-implemented method of controlling a yaw motion of a vehicle having at least one front and rear axle during braking, the method comprising:
in a first control loop, providing a steering control signal to the vehicle by a first controller for controlling a steering behavior of the vehicle according to a driver's command,
providing at least one first closed-loop feedback signal indicative of a vehicle motion state to the first controller,
in a second control loop, estimating at least one slip angle of the vehicle in an estimation module of a second controller after initiating a braking of the vehicle and generating, in a control module of the second controller, an output signal of the second controller based on the estimated slip angle,
controlling at least one braking actuator of the vehicle in accordance with the output signal of the second controller;
providing at least one second closed-loop feedback signal indicative of a vehicle motion state to the estimation module of the second controller as an input signal for estimating the at least one slip angle.

According to another aspect, there is provided a control system for controlling a yaw motion of a vehicle having at least one front and rear axle during braking, comprising:
a first control loop comprising a first controller configured to provide a steering control signal to the vehicle for controlling a steering behavior of the vehicle according to a driver's command,
a first closed loop providing at least one first closed-loop feedback signal indicative of a vehicle motion state to the first controller,
a second control loop comprising a second controller, the second controller including an estimation module configured to estimate at least one slip angle of the vehicle after initiating a braking of the vehicle and a control module configured to generate an output signal based on the estimated slip angle;
wherein the second controller is configured to be coupled with at least one braking actuator of the vehicle for applying a respective brake force or brake pressure to wheels of at least one of the front and rear axle in accordance with the output signal;
a second closed loop providing at least one second closed-loop feedback signal indicative of a vehicle motion state to the estimation module of the second controller as an input signal to the estimation module for estimating the at least one slip angle.

The computer-implemented method and control system for controlling a yaw motion of a vehicle according to aspects of the invention are capable to produce a favorable yaw moment curve that adapts to, both, the vehicle motion behavior and the driver's steering behavior during braking. In particular, they are capable of controlling a vehicle's yaw-motion, or a vehicle trailer combination's yaw-motion having a tractor vehicle and a trailer.

Advantageously, brake pressures or respectively brake forces acting on one or more braking actuators and wheels, respectively, of the vehicle may be controlled on one or more wheels of the vehicle in such a way that the desired trend of the yaw moment arises. This trend shall represent an optimum between vehicle controllability and shortest possible braking distance. The invention assumes that critical vehicle states, such as side-slip angle or axle-slip angles, respectively, are also influenced by the behavior of the driver. An experienced and focused driver shows a different reaction to a high yaw moment than a less practiced driver. The reaction of the driver can be identified, analyzed, and judged through these estimated vehicle motion states. Using the results of the analysis, respective control signals can be calculated and sent to the one or more actuators of the brake system.

According to an embodiment of the control method, estimating the at least one slip angle of the vehicle in the estimation module comprises estimating a sideslip angle, or slip angles of the front and rear axles, of the vehicle. Accordingly, in an embodiment of the control system, the estimation module is configured to estimate at least one of a sideslip angle of the vehicle and slip angles of the front and rear axles, of the vehicle.

According to an embodiment, the control method further comprises providing at least one of a parametrizable ideal slip angle characteristic and maximum slip angle characteristic to the control module of the second controller as a respective reference signal. Accordingly, in an embodiment of the control system, the second controller further comprises a setting module configured to provide at least one of a parametrizable ideal slip angle characteristic and maximum slip angle characteristic to the control module as a respective reference signal.

According to an embodiment, the control method further comprises limiting, in the control module of the second controller, at least one first parameter indicative of a maximum allowed brake force difference or brake pressure difference between a left and a right wheel of at least one of the front and rear axle, and generating, in the control module of the second controller, the output signal of the second controller based on the at least one first parameter. Accordingly, in an embodiment of the control system, the control module is configured to limit at least one first parameter indicative of a maximum allowed brake force difference or brake pressure difference between a left and a right wheel of at least one of the front and rear axle, and to generate the output signal of the second controller based on the at least one first parameter.

According to an embodiment, the control method further comprises limiting, in the control module of the second controller, at least one second parameter indicative of a gradient of a brake force difference or brake pressure difference between a left and a right wheel of at least one of the front and rear axle, and generating, in the control module of the second controller, the output signal of the second controller based on the at least one second parameter. Accordingly, in an embodiment of the control system, the control module is configured to limit at least one second parameter indicative of a gradient of a brake force difference or brake pressure difference between a left and a right wheel of at least one of the front and rear axle, and to generate the output signal of the second controller based on the at least one second parameter.

According to an embodiment, the first and second control loops are independent, and operated independently, from one another.

In another aspect, a vehicle control system configured to control a yaw motion of a vehicle having at least one front and rear axle during braking comprises a control system as described herein, and at least one braking actuator coupled with the second controller for applying a respective brake force or brake pressure to wheels of at least one of the front and rear axles in accordance with the output signal of the second controller.

In another aspect, a vehicle comprises at least one front and rear axle comprising respective wheels, and such vehicle control system as described herein which is configured to apply a respective brake force or brake pressure to the wheels or wheel arrangements during braking of the vehicle.

The invention will now be described with reference to the drawings in which:
- Fig. 1: shows a schematic depiction of an exemplary vehicle during braking on a split-mu surface according to embodiments of the invention,
- Fig. 2: shows an embodiment of a control system for controlling a yaw motion of a vehicle, such as the one shown in Fig. 1, according to aspects of the invention,
- Fig. 3: shows an embodiment of a control system for controlling a yaw motion of a vehicle according to aspects of the invention,
- Fig. 4: illustrates an exemplary side-slip control over time during split-mu braking according to embodiments of the invention.

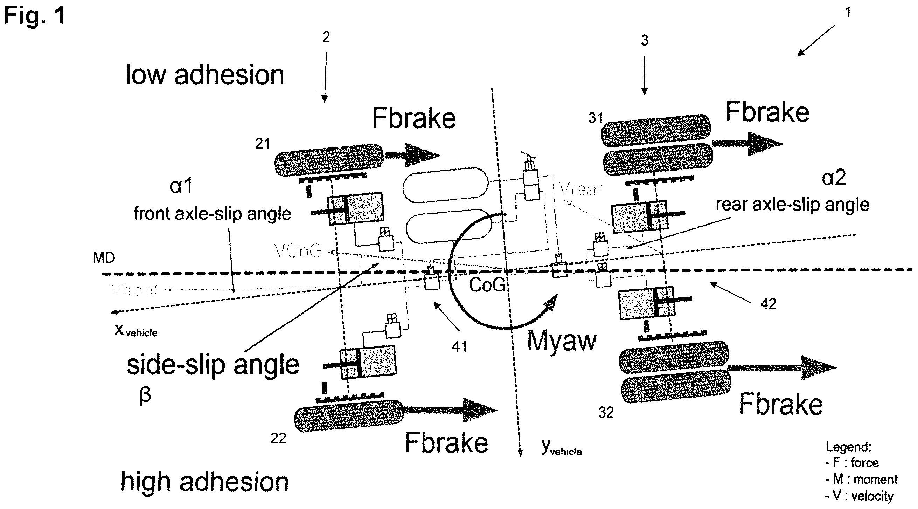

**Fig. 1** shows a schematic depiction of an exemplary vehicle during braking on a split-mu surface according to embodiments of the invention. In particular, **Fig. 1** shows an example of a so-called 4x2 truck during braking in a split-mu situation. Such exemplary axle configuration may be critical because of a relatively short wheelbase and, in empty conditions, minimal rear axle loads. In general, however, the method and control systems described herein target all existing vehicle axle configurations having at least one front and rear axle.

In the present embodiment, the vehicle 1 has a front axle 2 with right and left side wheels 21, 22, and a rear axle 3 with right and left side wheels 31, 32, here in a double wheel configuration. The vehicle 1 comprises braking actuator arrangements 41 and 42 (or short: braking actuator) for the front and rear axles, respectively, which comprise, e.g., brake operating cylinders acting on a respective brake disk connected to a respective wheel for slowing down the rotating movement of the respective wheel, as commonly known. In such brake systems, the braking force acting on the respective wheel is dependent on the brake pressure resulting from compressed air acting on the respective actuator, e.g. brake operating cylinder.

When the vehicle 1 is moving (here: to the left) in moving direction MD and brakes on a surface where the adhesion coefficients are sidewise different, then the acting brake forces will arise asymmetric as well. Because of the brake force difference between the wheels on both sides, a yaw-moment Myaw is generated, which turns the vehicle 1 around its vertical axis (which is vertical to the drawing plane), so that its longitudinal axis x_{vehicle} and lateral axis y_{vehicle} are turned from the moving direction MD before initiating braking around the vehicle's center of gravity, CoG, around a rotational axis through the CoG which is perpendicular to the vehicle's longitudinal axis x_{vehicle} and lateral axis y_{vehicle}. As the vehicle 1 is turned, it builds up lateral velocity, reflected in **Fig.** 1 with VCoG (velocity of CoG) and Vrear (velocity of the rear axle), while still maintaining longitudinal velocity of the front axle, reflected in **Fig. 1** with Vfront, in the moving direction MD before initiating braking. In such situation, the inventors found that with using the side-slip angle β (between direction of VCoG and x_{vehicle}) or analogously the axle-slip angles α1 and α2 of the front and rear axles 2, 3 (between direction of Vfront and x_{vehicle}, and direction of Vrear and x_{vehicle} ), respectively, it is possible to implement a closed loop control that can maintain stability of the vehicle 1 while achieving a braking distance as low as possible by controlling the brake pressures or brake forces Fbrake accordingly. In this way, as described in more detail herein and below, it is possible to produce a favorable yaw moment curve of the vehicle 1 that adapts to, both, the vehicle motion behavior and the driver's steering behavior during braking.

In particular, according to one aspect of the invention, a feedback controller is introduced which suggests an optimal, not zero target side-slip angle or axle-slip angle, respectively, which shall be allowed for the vehicle to be able to build up additional brake force on the high adhesion side, so reducing the braking distance. Further, the inventors found that, since the side-slip angle and similarly the axle-slip angles also depend on driver actions and the vehicle dynamic properties, they are both proper feedback signals for a feedback control loop in order to make a yaw-moment control adaptive to these influences.

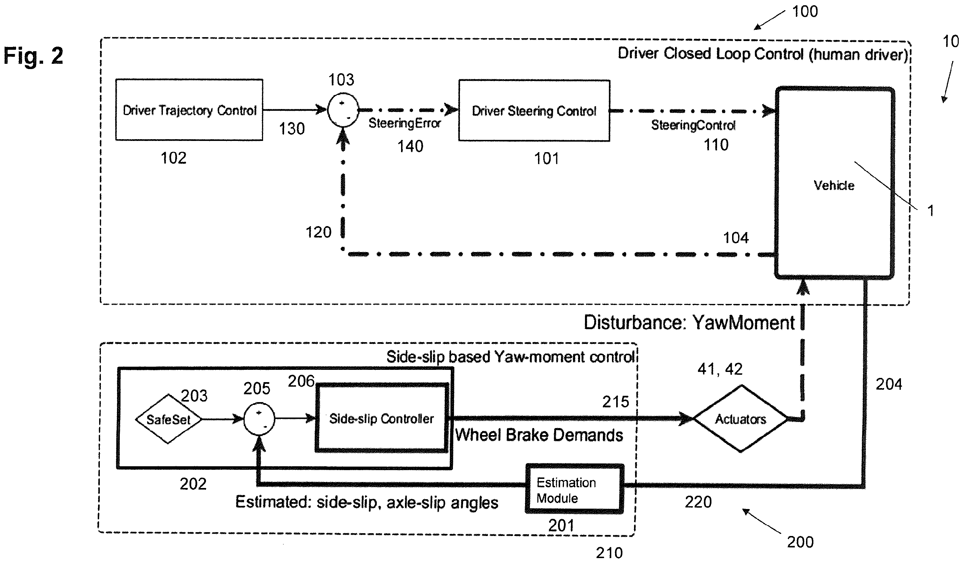

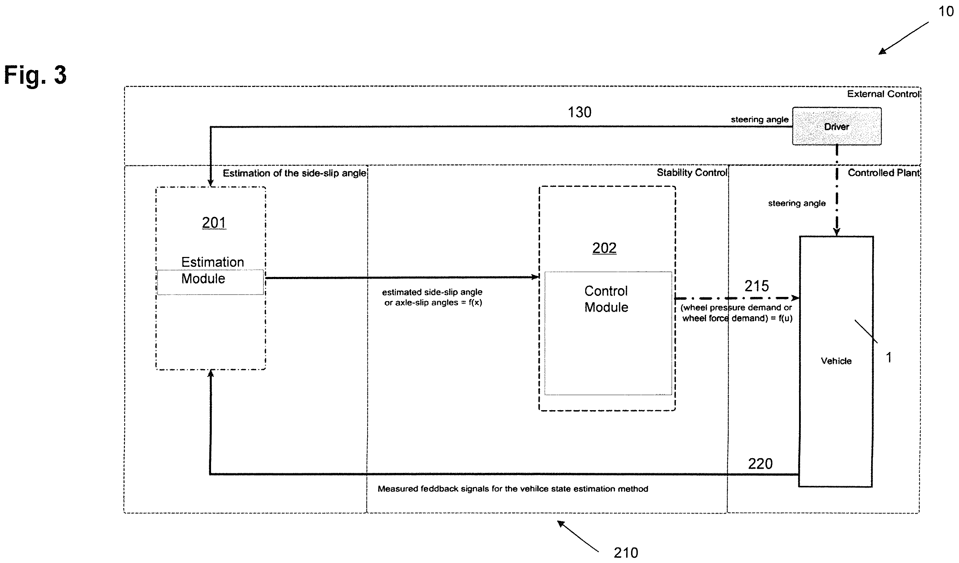

**Fig. 2** and **Fig. 3** each show a respective embodiment of a control system for controlling a yaw motion of a vehicle, such as the one shown in Fig. 1, according to aspects of the invention.

According to an aspect, there is provided a closed loop control of the yaw-motion of the vehicle during split-mu braking. Such approach, as mentioned above, has the advantage over any open loop yaw-moment controls, that it can adapt to different driver capabilities and behavior as well as vehicle behaviors, thus it can significantly reduce the braking distance in split-mu situation. The control method according to aspects of the invention is based on vehicle motion state estimates, in particular side-slip angle or axle-slip angles, respectively.

In view of the fact that such vehicle states are typically not, or cannot be, directly measured, the inventors nevertheless discovered that an estimation method for estimating a vehicle's slip angle may be employed instead to implement a control algorithm according to aspects as described herein.

According to embodiments, a method for estimating a vehicle's side-slip angle is implemented, as described, for example, in EP 2 684 753 B1, the contents of which regarding estimating a side-slip angle are included herein by reference. The method disclosed therein describes a possible method that can feed a controller with slip angle estimates, such as side-slip or axle-slip angles. Side slip estimation according to aspects of the present invention can include, like the method as disclosed in EP 2 684 753 B1, for example, a side-slip estimation on the basis of the following measured signals which are directly or indirectly measured with one or more sensors arranged in relation to, or installed at, the vehicle: Longitudinal vehicle velocity (gathered for instance from an onboard electronic control unit, ECU), steering wheel angle or steering wheel angles, if more steered axles are installed, and/or yaw rate of the vehicle. The measured signals are gathered from the towing vehicle in case of a vehicle combination. The method as disclosed in EP 2 684 753 B1 is only an example of a possible side slip estimation which may be used in connection with the present invention. Other known methods for estimating a slip angle of the vehicle, such as side-slip angle of the vehicle and/or axle-slip angle of the front and rear axles, may also be used.

For example, a control method and system may be implemented using a system structure as shown in the block diagram according to **Fig. 2** in connection with **Fig. 3**.

A control system 10 for controlling a yaw motion of vehicle 1 during braking basically comprises the following components: a first control loop 100 comprising a first controller 101 configured to provide a steering control signal 110 to the vehicle 1 for controlling a steering behavior of the vehicle according to a driver's command received through, e.g., an interface component 102 illustrated and designated in **Fig. 2** as "Driver Trajectory Control". For example, such interface component comprises a steering wheel and a braking pedal which are operated by the driver during driving, and in particular for initiating and during the braking, thus controlling a vehicle's trajectory. A first closed loop 104 provides at least one first closed-loop feedback signal 120 indicative of a vehicle motion state of the vehicle 1 to the first controller 101 via an adder 103 which outputs a steering error signal 140 between an output signal 130 of the interface component 102 (such as command steering angle) and the closed-loop feedback signal 120 (such as actual steering angle).

A second control loop 200 comprises a second controller 210 which includes an estimation module 201 estimating at least one slip angle of the vehicle 1 after initiating a braking of the vehicle and a control module 202 which generates one or more output signals 215 based on the estimated slip angle(s). The second controller 210 is coupled with at least one of the braking actuator arrangements 41, 42 of the vehicle 1 for applying a respective brake force or brake pressure to one or more of the wheels 21, 22, 31, 32 of at least one of the front and rear axles 2, 3, respectively, in accordance with the output signal(s) 215. A second closed loop 204 provides at least one second closed-loop feedback signal 220 which is indicative of a vehicle motion state to the estimation module 201 of the second controller 210 as an input signal to the estimation module 201 for estimating the one or more slip angles.

Thus, according to aspects of the invention, measured signals, e.g. directly or indirectly supplied from one or more vehicle sensors, indicative of one or more vehicle motion states, such as longitudinal or lateral velocity and/or acceleration, that are used in the vehicle state estimation method are fed back to the estimation, which then provides appropriate feedback signal for the control algorithm. Particularly, the controller 210 uses side-slip angle or front and rear axle-slip angles, respectively, as an input. The control algorithm can be nested in any vehicle dynamic control function, e.g., ABS or ESP, that has access to influence the braking forces of the vehicle. According to embodiments, the output signal 215 of the controller 210 is proportional to the maximum allowed brake force or alternatively brake pressure difference between the two sides of the vehicle 1.

A time-critical aspect to be considered when designing such closed loop control algorithm is the independent driver input on the controlled system, since driver behavior influences the controlled system states. In particular, since the driver has the steering angle under control and has an independent perception of vehicle motion state, the vehicle behavior is strongly influenced by driver's reactions.

According aspects of the invention, the driver closed loop control 100 is assumed to be stable in normal conditions. A problem with split adhesion surface braking is the amount of disturbance that the brake force difference generated yaw-moment introduces to this closed loop system. The disturbance rejection of the driver closed loop control 100 is dependent on the driver capabilities, condition, and the vehicle parameters. These are properties that aspects of the invention utilize in the control method and system to further decrease the stopping distance by adjusting this disturbance to acceptable limits of the driver closed loop control system 100. This way, one can also reduce the risk of interference between the two closed loop controllers.

According to aspects of the invention, the control method is adjusting the gradient and the maximum values of the actual brake pressure difference or brake force difference, respectively. In order to ensure or improve robustness, the approach only reduces the allowed gradient and maximum values of the brake pressure difference or brake force difference, respectively, but does not increase the resulting limit during a braking maneuver. This way the driver closed loop system 100 can adapt to the changed properties of the control loop. The amount of reduction is based on an error signal (output by adder 205) calculated from a reference (for example, set in the safe-set module 203) and the actual estimated vehicle side-slip angle or axle-slip angle, respectively. According to some embodiments, the side-slip controller 206 uses proportional logic as follows:
▪ |β| < β_{ideal} or alternatively |α| < α_{ideal}: maximum pressure/force difference and pressure/force difference gradient.
▪ βₘₐₓ < |β| or alternatively αₘₐₓ < |α|: no pressure/force difference, pressure/force difference gradient reduced to zero.
▪ β_{ideal} < |β| < βₘₐₓ (α_{ideal} < | α | < αₘₐₓ:): interpolation between zero and maximum pressure/force difference, interpolation between zero and maximum pressure/force difference gradient.
Where:
β : side-slip angle; α: axle-slip angle

Each braking is individually evaluated by the algorithm. The amount of brake pressure or respectively brake force difference reduction of the previous braking has no influence on the current decision of the controller 210.

In an embodiment, the controller 210 builds a reference that models an ideal side-slip angle based on the speed of the vehicle. The properties of the reference can be parameterized. For example, an ideal side-slip angle is set for two speeds, preferably a high speed and a low speed. At low speed, the ideal side-slip angle is reduced to help to stop straight at the end of the braking. And also the maximum allowed side-slip angle can be set, where the reduction of brake pressure or respectively brake force difference would reach its minimum, resulting in a "select low control method" (i.e. the maximum brake force on the high-adhesion side is limited by the low-adhesion side), as mentioned before. This reference we can define the same way for the axle-slip angles of the vehicle.

Apart from the ideal side-slip curve the control has adjustable absolute maximum allowed brake pressure / brake force difference parameters and adjustable gradient parameters for the actual increase of the currently allowed pressure / force difference.

In potential implementations, one or more components of the control loops 100, 200, controllers 101, 206, 210, estimation module 201 and/or control module 202, and/or some of the data sources (like one or more sensors, or interface component 102 or safe-set module 203) may be implemented in software and/or hardware, in discrete or distributed manner, in any appropriate processing device, such as in one or more microprocessors of a local device, e.g., of an electronic control unit (ECU) of the vehicle and/or of one or more server computers accessible through local network and/or the internet. Unless stated otherwise, a component such as a controller or module, processor or a memory or storage device described as being configured to perform a task may be implemented as a general component that is temporarily configured to perform the task at a given time or a specific component that is manufactured to perform the task. For example, the terms controller, or module, respectively refer to one or more devices, circuits, microprocessors, servers, processing cores, and/or software modules configured to process signals or data, such as sensor signals, data signals and/or computer program instructions.

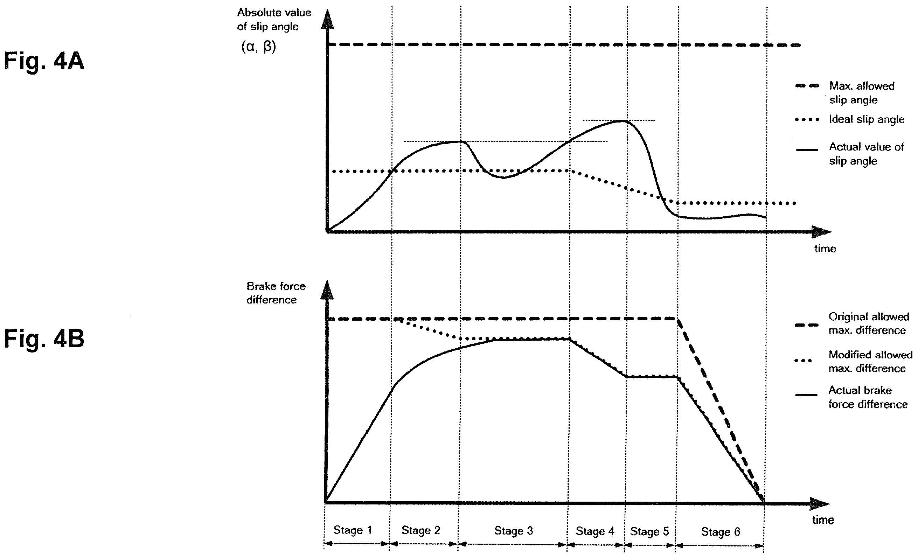

**Fig. 4A** and **Fig. 4B** illustrate an exemplary side-slip based control method over time during split-mu braking according to embodiments of the invention.

| | |
|---|---|
| Stage 1: | The braking of the vehicle 1 starts with increasing braking force on the high-adhesion side of the vehicle in that the controller 210 increases the actual brake force difference with the predefined gradient, thus the yaw-moment |
| | Myaw increases, and the vehicle 1 starts to build a side-slip angle β (such as illustrated in **Fig. 1**). |
| Stage 2: | The side-slip angle β exceeds a defined ideal value, so the controller 210 intervenes. Proportional to the error between the reference curve (stored, e.g., in a memory of safe set module 203) and the actual side-slip angle β, the controller 210 reduces the gradient of the actual pressure/force difference build-up and decreases the allowed maximal pressure/force difference. |
| Stage 3: | As a result of the intervention by the driver closed loop system 100, the vehicle 1 regains stability and increasing of the side-slip angle β stops. The controller 210 can further increase the actual pressure/force difference until the maximum resulted in Stage 2. |
| Stage 4: | The side-slip angle β of the vehicle 1 exceeds the last maximum, resulting in further reduction of the actual and maximum pressure/force difference by controller 210. |
| Stage 5: | The side-slip angle β of the vehicle 1 is decreasing, the driver closed loop control 100 is stable again. The side-slip angle based yaw-moment controller 210 can hold the pressure/force differences of the last step. |
| Stage 6: | Before standstill, the force difference may reduce to zero to reach a smooth stop. |

Through such procedure the advantage of the invention can be clearly seen. The control method can identify the maximum brake pressure/force difference, that can be handled by the driver in the given situation. This way the full capabilities of the environmental conditions and driver capabilities can be utilized on all vehicle configurations and the stopping distance can be further improved while maintaining stability and comfort.

### REFERENCE SIGNS LIST

- 1: vehicle
- 2: front axle
- 3: rear axle
- 10: control system
- 21, 22: front wheels
- 31, 32: rear wheels
- 41, 42: braking actuator arrangement
- 100: first control loop
- 101: first controller
- 102: interface component
- 103: adder
- 104: first closed loop
- 110: steering control signal
- 120: first closed-loop feedback signal
- 130: output signal
- 140: steering error signal
- 200: second control loop
- 201: estimation module
- 202: control module
- 203: safe-set module
- 204: second closed loop
- 205: adder
- 206: side-slip controller
- 210: second controller
- 215: output signal
- 220: second closed-loop feedback signal
- α: axle-slip angle
- β: side-slip angle
- Fbrake: brake force
- CoG: center of gravity
- Myaw: yaw moment
- MD: moving direction
- V: velocity
- x: longitudinal axis
- y: lateral axis

## Claims

1. A computer-implemented method of controlling a yaw motion of a vehicle (1) having at least one front and rear axle (2, 3) during braking, the method comprising:
in a first control loop (100), providing a steering control signal (110) to the vehicle (1) by a first controller (101) for controlling a steering behavior of the vehicle according to a driver's command,
providing at least one first closed-loop feedback signal (120) indicative of a vehicle motion state to the first controller (101),
in a second control loop (200), estimating at least one slip angle (α, β) of the vehicle in an estimation module (201) of a second controller (210) after initiating a braking of the vehicle and generating, in a control module (202) of the second controller (210), an output signal (215) of the second controller (210) based on the estimated slip angle (α, β),
controlling at least one braking actuator (41, 42) of the vehicle (1) in accordance with the output signal (215) of the second controller (210);
providing at least one second closed-loop feedback signal (220) indicative of a vehicle motion state to the estimation module (201) of the second controller (210) as an input signal for estimating the at least one slip angle (α, β).

2. The method according to claim 1, wherein estimating the at least one slip angle of the vehicle in the estimation module comprises estimating a sideslip angle (β), or slip angles (α1, α2) of the front and rear axles (2, 3), of the vehicle (1).

3. The method according to claim 1 or 2, further comprising providing at least one of a parametrizable ideal slip angle characteristic and maximum slip angle characteristic to the control module (202) of the second controller (210) as a respective reference signal.

4. The method according to one of claims 1 to 3, further comprising limiting, in the control module (202) of the second controller (210), at least one first parameter indicative of a maximum allowed brake force difference or brake pressure difference between a left and a right wheel (21, 22, 31, 32) of at least one of the front and rear axle (2, 3), and generating, in the control module (202) of the second controller (210), the output signal (215) of the second controller (210) based on the at least one first parameter.

5. The method according to one of claims 1 to 4, further comprising limiting, in the control module (202) of the second controller (210), at least one second parameter indicative of a gradient of a brake force difference or brake pressure difference between a left and a right wheel (21, 22, 31, 32) of at least one of the front and rear axle (2, 3), and generating, in the control module (202) of the second controller (210), the output signal (215) of the second controller (210) based on the at least one second parameter.

6. The method according to one of claims 1 to 5, wherein the first and second control loops (100, 200) are independent from one another.

7. A control system (10) for controlling a yaw motion of a vehicle (1) having at least one front and rear axle (2, 3) during braking, comprising:
a first control loop (100) comprising a first controller (101) configured to provide a steering control signal (110) to the vehicle (1) for controlling a steering behavior of the vehicle according to a driver's command,
a first closed loop (104) providing at least one first closed-loop feedback signal (120) indicative of a vehicle motion state to the first controller (101),
a second control loop (200) comprising a second controller (210), the second controller (210) including an estimation module (201) configured to estimate at least one slip angle (α, β) of the vehicle (1) after initiating a braking of the vehicle and a control module (202) configured to generate an output signal (215) based on the estimated slip angle (α, β);
wherein the second controller (210) is configured to be coupled with at least one braking actuator (41, 42) of the vehicle (1) for applying a respective brake force or brake pressure to wheels (21, 22, 31, 32) of at least one of the front and rear axle (2, 3) in accordance with the output signal (215);
a second closed loop (204) providing at least one second closed-loop feedback signal (220) indicative of a vehicle motion state to the estimation module (201) of the second controller (210) as an input signal to the estimation module (201) for estimating the at least one slip angle (α, β).

8. The control system according to claim 7, wherein the estimation module (201) is configured to estimate at least one of a side-slip angle (β) of the vehicle (1) and slip angles (α1, α2) of the front and rear axles (2, 3), of the vehicle.

9. The control system according to claim 7 or 8, the second controller (210) further comprising a setting module (203) configured to provide at least one of a parametrizable ideal slip angle characteristic and maximum slip angle characteristic to the control module (202) as a respective reference signal.

10. The control system according to one of claims 7 to 9, wherein the control module (202) is configured to limit at least one first parameter indicative of a maximum allowed brake force difference or brake pressure difference between a left and a right wheel (21, 22, 31, 32) of at least one of the front and rear axle (2, 3), and to generate the output signal (215) of the second controller (210) based on the at least one first parameter.

11. The control system according to one of claims 7 to 10, wherein the control module (202) is configured to limit at least one second parameter indicative of a gradient of a brake force difference or brake pressure difference between a left and a right wheel (21, 22, 31, 32) of at least one of the front and rear axle (2, 3), and to generate the output signal (215) of the second controller (210) based on the at least one second parameter.

12. A vehicle control system configured to control a yaw motion of a vehicle having at least one front and rear axle during braking, comprising
a control system (10) according to one of claims 7 to 11, and
at least one braking actuator (41, 42) coupled with the second controller (210) for applying a respective brake force or brake pressure to wheels (21, 22, 31, 32) of at least one of the front and rear axles (2, 3) in accordance with the output signal (215) of the second controller (210).

13. A vehicle (1) comprising
at least one front and rear axle (2, 3) comprising respective wheels (21, 22, 31, 32),
a vehicle control system according to claim 12 configured to apply a respective brake force or brake pressure to the wheels (21, 22, 3, 32) during braking of the vehicle (1).
